# EUROPÄISCHE PATENTSCHRIFT

(11) **EP 2 368 615 B1**
(45) Veröffentlichungstag und Bekanntmachung des Hinweises auf die Patenterteilung: **18.05.2016**
(21) Anmeldenummer: 11157790.4
(22) Anmeldetag: 11.03.2011
(51) Int. Cl.: B01D 29/11, B01D 35/18, B01D 36/00

(54) **Filtereinrichtung**
Filter device
Dispositif de filtre

(30) Priorität: 18.03.2010 DE 102010011905
(43) Veröffentlichungstag der Anmeldung: 28.09.2011
(60) Teilanmeldung: 16156136.0
(73) Patentinhaber: MAHLE International GmbH, 70376 Stuttgart (DE)
(72) Erfinder: Hoffmann, Dierk, 70569, Stuttgart (DE)
(74) Vertreter: BRP Renaud & Partner mbB Rechtsanwälte Patentanwälte Steuerberater

(56) Entgegenhaltungen:
- US-A- 5 230 812

## Beschreibung

Die vorliegende Erfindung betrifft eine Filtereinrichtung mit einem, einen Filtergehäusetopf und einen Filtergehäusedeckel aufweisenden Filtergehäuse, gemäß dem Oberbegriff des Anspruchs 1.

Aus der US 5,230,812 A ist eine Filtereinrichtung mit einem einen Filtergehäusetopf und einem Filtergehäusedeckel aufweisenden Filtergehäuse bekannt, wobei der Filtergehäusetopf aus Metall ausgebildet sein kann.

Um Filtereinrichtungen insbesondere auch für einen Crash-Fall sicher auslegen zu können, sind deren Filtergehäuse oftmals aus Metall ausgebildet, wodurch die Filtereinrichtung an sich eine deutlich erhöhte Stabilität aufweist. Nachteilig bei derartigen Filtergehäusen aus Metall ist jedoch, dass sämtliche Stutzen zur Ver- und Entsorgung der Filtereinrichtung aufwendig angelötet bzw. angeschweißt und abgedichtet werden müssen, wodurch ein nicht unerheblicher Kostenfaktor entsteht.

Die vorliegende Erfindung beschäftigt sich daher mit dem Problem, für eine Filtereinrichtung eine verbesserte oder zumindest eine alternative Ausführungsform anzugeben, die sich einerseits durch eine hohe Crash-Stabilität und andererseits durch vergleichsweise geringe Fertigungskosten auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Filtereinrichtung mit einem metallischen Filtergehäuse, das heißt mit einem zumindest teilweise metallischen Filtergehäusedeckel und einem Filtergehäusetopf aus Metall, den Filtergehäusedeckel in der Art einer Lochmaske mit zumindest einer, vorzugsweise zwei Durchgangsöffnungen auszuführen, durch welche beim fertig montierten Filter Stutzen aus Kunststoff zur Ver-/Entsorgung der Filtereinrichtung hindurch gesteckt werden können. Der wenigstens eine aus Kunststoff ausgebildeten Stutzen zur Ver- und Entsorgung der Filtereinrichtung ist gegenüber dem Filtergehäusetopf und gegenüber dem Filtergehäusedeckel abgedichtet, so dass eine zusätzliche aufwendige Dichtung zwischen den Metallteilen des Filtergehäuses, das heißt zwischen dem Filtergehäusedeckel und dem Filtergehäusetopf entbehrlich ist. Das einfache Durchstecken der aus Kunststoff ausgebildeten Stutzen erübrigt darüber hinaus ein aufwendiges Anlöten von metallischen Stutzen am Filtergehäusedeckel, wodurch die crash-optimierte Filtereinrichtung vergleichsweise kostengünstig hergestellt werden kann. Die metallische Ausbildung des Filtergehäuses dient dabei insbesondere zur Aufnahme von Druck- und Pulsationen.

Bei einer vorteilhaften Weiterbildung der erfindungsgemäßen Lösung, ist im Filtergehäusedeckel eine weitere Durchgangsöffnung vorgesehen, durch welche Anschlussgeometrien einer Heizeinrichtung und/oder eines Sensors aus dem Inneren des Filtergehäuses herausragen. Je nach gewünschter Ausführungsform ist es dabei mit dem erfindungsgemäßen Filtergehäusedeckel möglich, zusätzliche Bauteilkomponenten, die bspw. eben erwähnte Heizung oder eben erwähnten Sensor, durch eine weitere Durchgangsöffnung im metallischen Filtergehäusedeckel hindurchzuführen, so dass ein derartiger Filtergehäusedeckel leicht an unterschiedliche Varianten der Filtereinrichtung anpassbar ist. Generell lässt sich dabei der Filtergehäusedeckel mit dem Filtergehäusetopf nicht nur verschrauben, sondern kann mit diesem auch verbördelt sein. Ebenso wie die aus Kunststoff ausgebildeten Stutzen ist dabei auch die Heizung bzw. der Sensor gegenüber dem Filtergehäusedeckel bzw. gegenüber dem Filtergehäusetopf abgedichtet, wobei selbstverständlich denkbar ist, dass die Stutzen und die zugehörige Abdichtung in einem einzigen Kunststoffteil integriert sind.

Bei einer weiteren vorteilhaften Ausführungsform der erfindungsgemäßen Lösung, ist in einem Bodenbereich des Filtergehäusetopfs eine weitere Durchgangsöffnung vorgesehen, in welche ein Gewindeelement eingeclippst ist. Ein derartiges Gewindeelement kann bspw. aus Kunststoff ausgebildet sein und ein Innengewinde aufweisen, über welches bspw. eine Wasserablassschraube oder ein Sensor eingeschraubt und damit am Filtergehäusetopf befestigt werden können. Selbstverständlich wäre optional auch eine axiale Positionierung/Abstützung eines darüber befindlichen Filterelements durch in das Gewindeelement integrierte Rippen denkbar. Das Verschrauben des Sensors bzw. der Wasserablassschraube im Gewindeelement und insbesondere das Festziehen derselben bewirkt eine Abdichtung der im Filtergehäusetopf vorgesehenen weiteren Durchgangsöffnung, so dass nicht nur die Montage des Sensors bzw. der Wasserablassschraube vergleichsweise einfach gestaltet werden kann, sondern zusätzlich auch eine Abdichtung montagefreundlich bewerkstelligt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: eine Schnittdarstellung durch die Filtereinrichtung im Verbindungsbereich eines Filtergehäusedeckels mit einem Filtergehäusetopf,
- Fig. 3: eine Schnittdarstellung durch einen Bodenbereich der erfindungsgemäßen Filtereinrichtung.

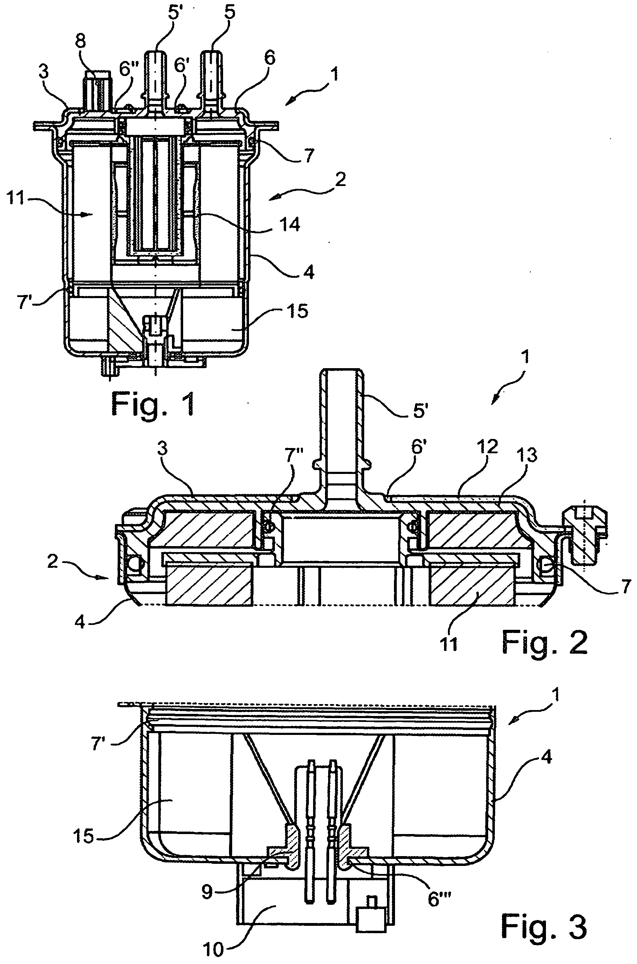

Entsprechend der Fig. 1, weist eine erfindungsgemäße Filtereinrichtung 1 ein Filtergehäuse 2 auf, das im Wesentlichen aus einem Filtergehäusedeckel 3 und einem damit verbundenen Filtergehäusetopf 4 besteht. Sowohl der Filtergehäusedeckel 3 als auch der Filtergehäusetopf 4 sind dabei erfindungsgemäß aus Metall, insbesondere aus Stahl ausgebildet, wodurch die erfindungsgemäße Filtereinrichtung 1 besonders crash-stabil ist. Um dabei Stutzen 5, 5' zur Ver- und Entsorgung der Filtereinrichtung 1 nicht ebenfalls aus Metall ausbilden und aufwendig, bspw. durch ein Verlöten, mit dem Filtergehäusedeckel 3 verbinden zu müssen, ist der Filtergehäusedeckel 3 aus zwei Bauteilen 12 und 13 aufgebaut ist. Das eine Bauteil 12 ist aus Metall in der Art einer Lochmaske mit zumindest zwei Durchgangsöffnungen 6 und 6' ausgebildet, während das andere Bauteil 13 aus Kunststoff ist, wobei die beiden Stutzen 5, 5' zur Ver- und Entsorgung der Filtereinrichtung 1 durch diese Durchgangsöffnungen 6 und 6' hindurch ragen.

Das Bauteil 13 ist gegenüber dem Filtergehäusetopf 4 durch eine Dichtung 7 abgedichtet. Das Bauteil 13 ist dabei in Kunststoff einfach und insbesondere auch kostengünstig herzustellen und zwar in nahezu beliebiger Form. Eine Abdichtung der Filtereinrichtung 1 erfolgt dabei über die aus Kunststoff ausgebildeten Stutzen 5, 5', welche bspw. mittels entsprechender Dichtungen 7 (vgl. Fig. 2), welche bspw. als Radialdichtring ausgebildet sind, gegenüber dem Filtergehäusetopf 4 abgedichtet sind. Selbstverständlich ist auch denkbar, dass die Stutzen 5, 5' und die zugehörigen Dichtungen 7 als einstückiges Kunststoffteil, insbesondere als Kunststoffspritzgussteil, ausgebildet sind. Das Bauteil 13 hat als zusätzliche Funktion Haltemittel mit denen ein Ringfilterelement 11 gehalten wird und im Falle eines Kraftstofffilters dient das Bauteil 13 zusätzlich als Haltemittel für ein weiteres Filterelement 14, beispielsweise für einen Coaleszer. An dem Ringfilterelement 11 befindet sich eine weitere Dichtung 7', die den Rein- von dem Rohraum trennt. Im Falle eines Kraftstoffflters wird in dem Raum 15 unterhalb des weiteren Filterelementes 14 auf der Reinseite das aus dem Kraftstoff abgeschiedene Wasser gesammelt, das dann über einen Wasserablass im Filtergehäuseboden abgelassen werden kann. Das Ringfilterelement 11 kann wie in Fig. 2 gezeigt mittels einer weiteren Dichtung 7" in das Bauteil 13 eingeclipst sein oder das weitere Filterelement 14.

Durch die Ausbildung des Filtergehäuses 2 aus Metall ist dieses nicht nur vergleichsweise stabil und dadurch crash-optimiert, sondern ist zusätzlich auch in der Lage Druck und Pulsationen problemlos aufzunehmen. Durch die aus Kunststoff ausgebildeten Dichtungen 7 bzw. Stutzen 5, 5' ist zwischen dem Filtergehäusedeckel 3 und dem Filtergehäusetopf 4 keine zusätzliche Dichtung erforderlich, so dass diese beiden Komponenten 3, 4 direkt miteinander, insbesondere miteinander verschraubt, verlötet oder verbördelt werden können. Wie insbesondere den Fig. 1 und 2 zu entnehmen ist, ist im Filtergehäusedeckel 3 eine weitere Durchgangsöffnung 6" vorgesehen, durch welche eine Heizeinrichtung 8 oder bspw. ein nicht gezeigter Sensor, hindurchragt. Prinzipiell kann dabei der Filtergehäusedeckel 3 noch mit weiteren, bspw. für weitere Funktionsbauteile erforderliche, Durchgangsöffnungen ausgestattet werden, wobei er stets seine lochmaskenartige Ausbildung behält und dadurch die Festigkeit des Filtergehäuses 2 garantiert. Generell können die Stutzen 5, 5' bzw. die Heizeinrichtung 8 auch in ein Kunststoffspritzgussteil integriert sein.

Die Stutzen 5 und 5' dienen als Zu- und Abfluss der zu filternden Flüssigkeit. In Fig. 1 ist vorzugsweise 5 der Zulauf und 5'der Ablauf. In dem Filtergehäuse 2 befindet sich das Ringfilterelement 11 und die weitere Filterstufe 14 um Wasser aus dem Kraftstoff abzuscheiden. Sollte die Filtereinrichtung 1 als Ölfilter ausgestaltet sein so benötigt man keine weitere Filterstufe.
Eine mögliche Heizung kann sowohl zentral in den mittleren Stutzen 5' eingesteckt werden, dies macht aber nur Sinn, wenn der Zulauf in die Filtereinrichtung 1 auch über den Stutzen 5' erfolgt. Alternativ kann eine mögliche Heizung für das zu filternde Medium auch in den Kunststoffteil, das heißt das Bauteil 13, des zweiteiligen Filtergehäusedeckels 3 integriert sein.

Die Filtereinrichtung 1 kann bspw. als Kraftstoff oder als Schmierstofffilter, insbesondere als Ölfilter, ausgebildet sein, wobei in einem Bodenbereich des Filtergehäusetopfs 4, wie dies bspw. gemäß der Fig. 3 gezeigt ist, eine weitere Durchgangsöffnung 6'" vorgesehen sein kann, in welche ein Gewindeelement 9 eingeclipst ist. Das Gewindeelement kann dabei ebenfalls aus Kunststoff ausgebildet sein und ein Innengewinde zur Aufnahme bspw. eines Sensors 10 oder einer Wasserablassschraube aufweisen. Durch das Einschrauben der Wasserablassschraube bzw. des Sensors 10 in das Innengewinde des Gewindeelements 9 wird dieses gegen den Filtergehäusetopf 4 verspannt und dadurch die Durchgangsöffnung 6'" abgedichtet. Das Gewindeelement 9 wird somit nicht vom metallischen Filtergehäusetopf 4 umschlossen, sondern lediglich in diesen eingeclipst und gegebenenfalls gegen Verdrehen gesichert. Gleichzeitig dient es als Halter für den oben erwähnten Sensor 10 bzw. eine Ablaßschraube, insbesondere eine Wasserablassschraube.

Mit der erfindungsgemäßen Filtereinrichtung 1 ist es möglich ein vergleichsweise widerstandsfähiges Filter zu schaffen, welches insbesondere crash-optimiert ist, wobei diese Filtereinrichtung 1 gleichzeitig im Vergleich zu bisher bekannten Filtereinrichtungen kostengünstig hergestellt werden kann, da ein aufwendiges und damit teures Anlöten von metallischen Stutzen nicht mehr erforderlich ist. Vielmehr wird zur Crash-Optimierung lediglich das Filtergehäuse 2 aus Metall ausgebildet, wobei im Fiitergehäusedeckel 3 entsprechende Durchgangsöffnungen 6, 6' und 6" vorgesehen sind, durch welche aus Kunststoff ausgebildete Stutzen 5, 5' zur Ver- und Entsorgung der Filtereinrichtung 1 sowie optional weitere Funktionselemente, wie bspw. eine Heizeinrichtung 8, gesteckt werden können.

## Patentansprüche

1. Filtereinrichtung (1) mit einem einen Filtergehäusetopf (4) und einen Filtergehäusedeckel (3) aufweisenden Filtergehäuse (2), wobei der Filtergehäusetopf (4) aus Metall ausgebildet ist,
**dadurch gekennzeichnet,**
**dass** der Filtergehäusedeckel (3) ein metallisches Bauteil (12) in der Art einer Lochmaske mit zumindest einer Durchgangsöffnung (6,6') aufweist sowie ein aus Kunststoff ausgebildetes Bauteil (13) in der Art zumindest eines aus Kunststoff ausgebildeten Stutzens (5,5') zur Ver-/Entsorgung der Filtereinrichtung (1), der gegenüber dem Filtergehäusetopf (4) und gegenüber dem Filtergehäusedeckel (3) abgedichtet ist und durch die Durchgangsöffnung (6,6') des Filtergehäusedeckels (3) hindurchragt.

2. Filtereinrichtung nach Anspruch 1,
**dadurch gekennzeichnet,**
**dass** im Filtergehäusedeckel (3) eine weitere Durchgangsöffnung (6") vorgesehen ist, durch welche eine Heizeinrichtung (8) oder ein Sensor ragt.

3. Filtereinrichtung nach Anspruch 1 oder 2,
**dadurch gekennzeichnet,**
**dass** der Filtergehäusedeckel (3) direkt mit dem Filtergehäusetopf (4) verbunden, insbesondere verschraubt ist.

4. Filtereinrichtung nach einem der Ansprüche 1 bis 3,
**dadurch gekennzeichnet,**
**dass** zumindest ein Dichtbereich oder eine Dichtung (7) zur Abdichtung des Filtergehäuses (2) aus Kunststoff, insbesondere als Elastomerteil, ausgebildet ist.

5. Filtereinrichtung nach einem der Ansprüche 1 bis 4,
**dadurch gekennzeichnet,**
**dass** die Filtereinrichtung (1) als Schmier- oder Kraftstofffilter ausgebildet ist.

6. Filtereinrichtung nach einem der Ansprüche 1 bis 5,
**dadurch gekennzeichnet,**
**dass** der Filtergehäusedeckel (3) und/oder der Filtergehäusetopf (4) aus Stahl ausgebildet sind.

7. Filtereinrichtung nach einem der Ansprüche 1 bis 6,
**dadurch gekennzeichnet,**
**dass** in einem Bodenbereich des Filtergehäusetopfs (4) eine Durchgangsöffnung (6"') vorgesehen ist, in welche ein Gewindeelement (9) eingeclipst ist.

8. Filtereinrichtung nach Anspruch 7,
**dadurch gekennzeichnet,**
**dass** in das Gewindeelement (9) eine (Wasser-)ablassschraube oder ein Sensor (10) eingeschraubt ist.

## Claims

1. A filter device (1) with a filter housing pot (4) and a filter housing (2) having a filter housing cover (3), wherein the filter housing pot (4) is formed from metal,
**characterized in,**
**that** the filter housing cover (3) has a metallic component (12) in the form of an aperture mask with at least one through-opening (6, 6') as well as a component (13) formed from plastic in the form of at least one port (5, 5') made from plastic for feeding/emptying the filter device (1), which port is sealed with respect to the filter housing pot (4) and/or with respect to the filter housing cover (3) and projects through the through-opening (6, 6') of the filter housing cover (3).

2. The filter device according to claim 1,
that in the filter housing cover (3) a further through-opening (6") is provided through which a heating device (8) or a sensor projects.

3. The filter device according to claim 1 or claim 2,
**characterized in**
**that** the filter housing cover (3) is directly connected, in particular screwed, to the filter housing pot (4).

4. The filter device according to any one of the claims 1 to 3,
**characterized in**
**that** at least one sealing region or one seal (7) for sealing the filter housing (2) is formed from plastic, in particular as elastomer part.

5. The filter device according to any one of the claims 1 to 4,
**characterized in**
**that** the filter device (1) is formed as lubricant filter or fuel filter.

6. The filter device according to any one of the claims 1 to 5,
**characterized in**
**that** the filter housing cover (3) and/or the filter housing pot (4) are formed from steel.

7. The filter device according to any one of the claims 1 to 6,
**characterized in**
**that** in a bottom region of the filter housing pot (4), a through-opening (6"') is provided into which a threaded element (9) is clipped.

8. The filter device according to claim 7,
**characterized in**
**that** into the threaded element (9), a (water) drain screw or a sensor (10) is screwed.

## Revendications

1. Dispositif de filtre (1) avec un carter de filtre (2) comportant un corps de carter de filtre (4) et un couvercle de carter de filtre (3), le corps de carter de filtre (4) étant en métal,
**caractérisé en ce que** le couvercle de carter de filtre (3) comporte un élément métallique (12) à la manière d'un masque perforé avec au moins une ouverture de passage (6, 6') ainsi qu'un élément en plastique (13) à la manière d'au moins un embout en plastique (5, 5') pour l'alimentation/l'évacuation du dispositif de filtre (1), lequel élément plastique est étanchéifié par rapport au corps de carter de filtre (4) et par rapport au couvercle de carter de filtre (3) et passe à travers l'ouverture de passage (6, 6') du couvercle de carter de filtre (3).

2. Dispositif de filtre selon la revendication 1, **caractérisé en ce qu'**il est prévu dans le couvercle de carter de filtre (3) une autre ouverture de passage (6") par laquelle passe un dispositif de chauffage (8) ou un capteur.

3. Dispositif de filtre selon la revendication 1 ou 2, **caractérisé en ce que** le couvercle de carter de filtre (3) est assemblé directement, notamment vissé, au corps de carter de filtre (4).

4. Dispositif de filtre selon l'une des revendications 1 à 3, **caractérisé en ce qu'**au moins une zone d'étanchéité ou un joint d'étanchéité (7) pour assurer l'étanchéité du carter de filtre (2) est conçu en plastique, notamment comme une pièce en élastomère.

5. Dispositif de filtre selon l'une des revendications 1 à 4, **caractérisé en ce que** le dispositif de filtre (1) est conçu comme un filtre de lubrifiant ou de carburant.

6. Dispositif de filtre selon l'une des revendications 1 à 5, **caractérisé en ce que** le couvercle de carter de filtre (3) et/ou le corps de carter de filtre (4) sont conçus en acier.

7. Dispositif de filtre selon l'une des revendications 1 à 6, **caractérisé en ce qu'**il est prévu dans une zone de fond du corps de carter de filtre (4) une ouverture de passage (6"') dans laquelle est clipsé un élément fileté (9).

8. Dispositif de filtre selon la revendication 7, **caractérisé en ce qu'**une vis de purge (d'eau) ou un capteur (10) est vissé dans l'élément fileté (9).
